# EUROPEAN PATENT SPECIFICATION

(11) **EP 3 441 631 B1**
(45) Date of publication and mention of the grant of the patent: **13.11.2024**
(21) Application number: 18187430.6
(22) Date of filing: 06.08.2018
(51) Int. Cl.: F16B 31/02, F16B 37/14, F16B 5/02

(54) **KNOB**
KNAUF
BOUTON

(30) Priority: 08.08.2017 IT 201700091642
(43) Date of publication of application: 13.02.2019
(73) Proprietor: ELESA S.p.A., 20129 Milano (IT)
(72) Inventor: BERTANI, Alberto, 20900 MONZA (IT)
(74) Representative: Vatti, Francesco Paolo

(56) References cited:
- EP-A1- 2 746 600
- EP-A1- 2 842 807

## Description

### Technical field

The present invention relates to an improved knob, in particular a knob apt to ensure the correct pulling force during the screwing phase and the rapid disengagement if the knob is released from the body to which it is fixed.

### Known art

Knobs are known in the field for connecting an object to a fixed body, so as to ensuring the torque limitation during the screwing phase, in order to avoid damaging the surfaces against which the knob goes into abutment.

In particular, US 6238155 describes a knob from which a central screw projects, wherein detents are provided to allow rotation in a predefined direction within a predetermined torque value, beyond which the knob slides with respect to the screw.

EP2746600 describes a torque limiting device connectable to a load carrier, such as a load carrier foot, and adapted for indicating a torque imparted by a user, the torque limiting device comprising a torque limiter, a connection member adapted to be connected to the load carrier foot and a head portion arranged on the connection member (31), the head portion (40) comprising a first and a second member.

EP2842807 describes a jaw member for a support assembly for securing a bicycle to a load carrier for a vehicle that comprises a frame work structure formed by at least one support element and at least one rib. The frame work structure is specifically adapted to enable the jaw member to withstand a relative high amount, of tensile stress while still being relatively light weight.

### Problem and solution

However, the solutions used as of today have shown a strong central load on the screw axis, causing obvious wear problems and sudden breakage, and therefore not ensuring the correct operation of the device itself.

Furthermore, the structure thus created is particularly simple, and consequently may be easily undergo manipulations, unauthorized modifications by operators that can modify the torque value, with the subsequent risk of causing damage to the element to which the knob is to be fixed.

Therefore, the need is felt to solve the aforementioned problems by providing a knob that allows quick disengagement and reduces the risk that during the tightening phase the operator exceeds in forcing, causing damage, until the breakage, of the knob and of the device that is connected to it.

It is also an object of the present invention to provide a tightening knob which is safe and that cannot be subjected to undesired and inappropriate modifications of the torque, by means of manipulations on the knob body itself.

Said objects are achieved by means of a knob having the features indicated in claim 1.

Other preferred features are reported in the secondary claims that best define the scope of the solution adopted herein.

### Brief Description of the Drawings

The invention is now described in detail, with reference to the attached figures, wherein:
fig. 1 is a top perspective view partially removed of the knob according to the invention;
fig. 2 is a cross-sectional view of the knob in fig. 1;
fig. 3 is an exploded view of the knob of fig. 1.
figs. 4a and 4b show some details of the engagement elements apt to ensure the correct operation of the knob according to the invention.

### Detailed description of the drawings

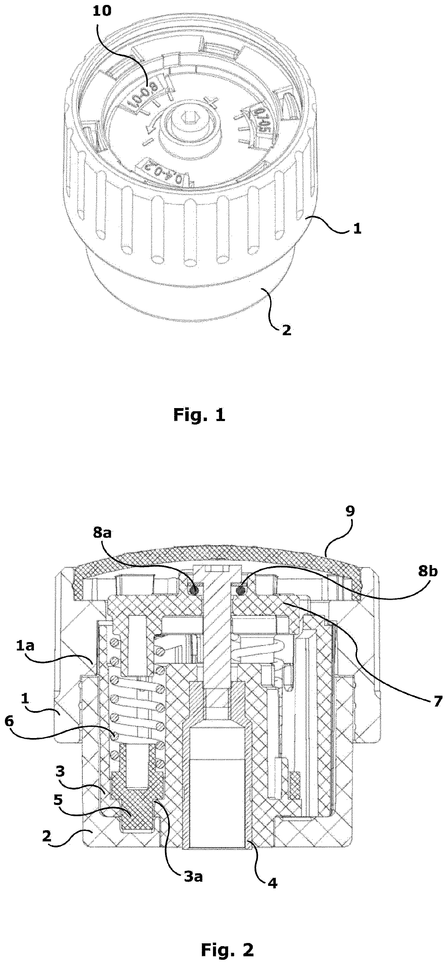

As shown in fig. 1, the knob is formed by an external gripping element 1, having a substantially cylindrical shape, and that is internally hollow, with the exception of a circular crown 1a arranged at its top, and a glass-shaped casing 2 centrally perforated and provided with tabs of radial engagement 2a on its top.

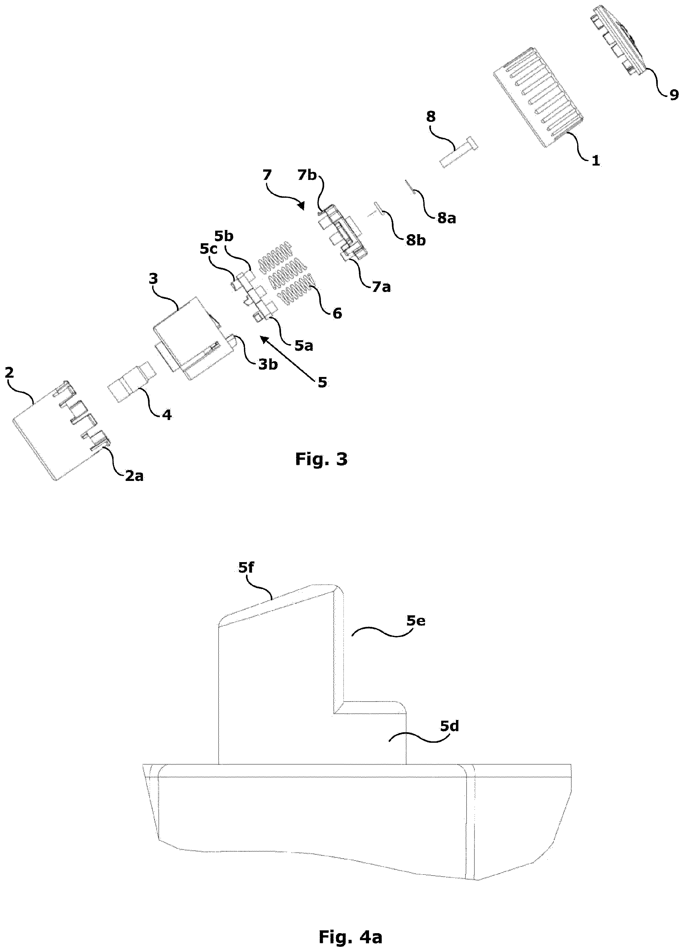

Said glass-shaped casing, as shown in fig. 2, is apt to house a glass-shaped body 3 therein, concentrically with said body 2, provided with a central hole for housing a bush 4, and also apt to house a slider 5. The base of said glass-shaped body 3 has a series of circular holes 3a, while at the top protruding tabs 3b (Fig. 3) are provided having top engagement teeth, the usefulness of which will be described later.

The aforementioned slider 5 is formed by an annular body 5a, from which pins 5b apt to house springs 6 housing pins 5b protrude above, while teeth 5c protrude below, which are apt to insert into said circular holes 3a on the bottom of said glass-shaped body 3.

In contrast to the springs - at the top position - there is provided a spacer 7, having a substantially discoidal shape, and centrally perforated for the insertion of a tightening screw 8. An o-ring 8a is preferably provided between the head of the screw 8 and the abutment surface of the spacer 7, apt to prevent, due to the friction, that the screw reduces the grip provided by the vibrations effect, and a flat washer 8b.

The spacer 7 is shaped so as to provide along the contour protruding tabs 3b housing loops, while along the lower surface it has cylindrical appendages 7a suitable for housing the upper end of said springs 6 and engagement tabs 7b with appropriate grooves not shown provided along the inner surface of said glass-shaped body 3.

A cover element 9, provided with a toroidal thickening and with engagement tabs along the lateral surface, respectively for engagement with the gripping element 1 and with the glass-shaped element 2, is further provided to cover the knob itself.

In order to facilitate regulation and adjustment operations , the glass-shaped body 3 has a radial scale 10 relative to the tightening torque on the springs, which correspond to cut-outs 7c provided on the face of the spacer 7.

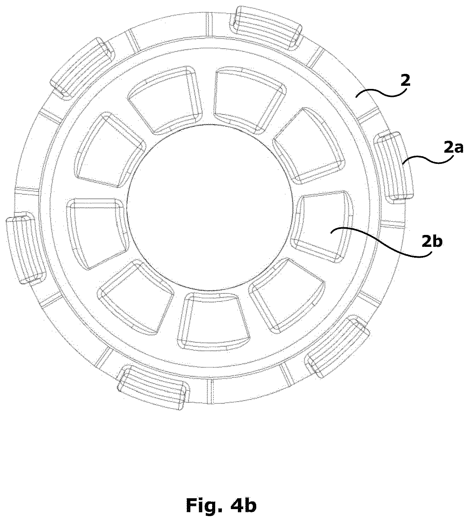

As shown in fig. 4a, the tooth 5c consist of a cylindrical body shaped so that a base 5d is recognized, a half-cylindrical projection 5e constituting a flat face and a top face 5f inclined from the inside towards the outside, to identify a sliding portion. Correspondingly, on the upper surface of the base 2a of the glass-shaped body 2 a series of shaped seats 2b are provided suitable for housing said slide 5f, making the slider 5 slide when the knob is screwed and acting as a contrast through engagement with the flat face 5e while unscrewing the knob.

Operatively, two main parts may be identified which form part of the knob according to the invention, that is a part fixed to the body on which the knob is mounted, and a movable part.

The fixed part consists of the substantially box-like assembly formed by the inner glass-shaped body 3 (to which the bush 1 is integral), the spacer 7 and the springs 6, and the connecting and boxing screw 8 with the associated o-rings 8a and washer 8b.

Therefore, the inner glass-shaped body 3 is co-moulded with the bush 1, then paying attention in housing the slider 5 inside the glass-shaped body 3, which has been suitably made of lubricated plastic material, in order to effectively resist wear.

In turn, the slider 5 is kept constrained in rotation by the teeth 5c housed within the holes 3a provided on the inner glass-shaped body 3, which will cause, in operation, the exclusively translational motion of the slider 5 itself with respect to the knob.

Once the springs 6 have been inserted within the pegs 5b of the slider 5, the spacer 7 is applied, in order to constrain also the aforementioned springs even at the top; thereafter, the operator fixes the spacer to the upper bush portion 1a of the glass-shaped body 3 provided with a tightening thread by means of the screw 8, paying attention when necessary also to insert a retaining ring 8a and washer 8b, apt to increase the tightening force and the compression of the springs.

Moreover, the tabs 7b of the spacer 7 are brought into engagement with the inner surface of the glass-shaped body 3, in order to effectively close the entire fixed part.

The movable part, on the other hand, is composed of the gripping element 1, the outer glass 2 and the cover 9, whose constituent elements are integral with each other by means of snap hooks. In addition to the above-mentioned properties, the cover 9 is shaped so as to prevent the release of the snap hooks by means of locking tabs.

From the above description, it is also evident that the slider 5 such structured inside the motion regulation element is the element that transmits the torque between the movable part, following the rotation of the knob by the operator, and the structure on which the knob is mounted.

The such created structure identifies a limited, numerically identifiable torque value, thanks to the radial scale 10 provided on the top of the glass 3, which identifies the torque value reported at the spacer 7 position. This allows the operator to easily define the torque value according the needs, and guarantee the correct operating of the knob in relation to the body on which it is mounted, and consequently to the operational needs that the latter must support.

Once the correct torque has been defined during the assembly, the knob is ready for conventional operation. The operator rotates the movable part of the knob, thus applying a torque through the slider 5: when the operator reaches the tightening torque value that brings the tooth 5d out of the seat 2a, the gripping element rotates in idle, thus keeping the tightening torque constant.

On the contrary, if one is interested in unscrewing the knob, the flat face 5e of the tooth element 5c projecting from the slider 5 guarantees the necessary and sufficient abutment to allow the correct separation of the knob from the body to which it is connected.

Subsequently, in order to determine a new torque, it is just required to remove the cover 9 and act on the screw 8 so that the spacer 7 modifies the load on the springs 6, by simply varying its height with respect to the crown 1a of the gripping element 1. In particular, by screwing the screw 8, a limitable increase in the torque value is obtained, until it reaches the abutment, while - logically - unscrewing until the spacer 7 is brought to the limit, the torque value is reduced.

As it appears clear to a medium expert in the art, the tabs 7b held in engagement with the glass-shaped body 3, guarantee the non-detachment of the spacer 7 from the fixed assembly of the knob according to the invention.

Laboratory tests have demonstrated that the such structure has great resistance to wear, since it was possible to carry out more than 100,000 cycles at maximum torque, without breakages or impediments to the correct functioning of the knob itself.

The above description considers that the connection with the control body of the knob is by means of a threaded bush apt to engage a screw provided on the complementary body. Otherwise, a stud may be provided instead of the bush, suitable for engagement with a threaded groove on the body on which the knob is to be mounted.

The embodiment and the variants described herein may undergo further modifications without departing from the scope of the patent protection defined by the attached claims.

## Claims

1. Knob for connecting an object to a fixed body, comprising an external hollow gripping element (1) which houses inside engagement means with said object and with said fixed body, **characterised in that** said engagement means comprises an outer glass-shaped casing (2) with a central hole combined with a fixed internal body comprising a inner glass-shaped body (3) which houses within torque adjusting means, wherein said torque adjusting means comprises:
- an annular slider (5) from which pegs (5b) project in one side end and engagement teeth (5c) project on an opposite side;
- a spacer (7), with a central hole, provided with engagement elements;
- a bush (4), co-moulded with said glass-shaped body (3), which houses a retaining screw (8) of said spacer (7) and
- springs (6) arranged between said spacer (7) and said slider (5), maintained in a stable position within the above-said pegs (5b) of said slider (5);
said internal glass-shaped body (3) being provided with a series of circular holes, on a base thereof, wherein said engagement teeth (5c) are inserted.

2. Knob as in claim 1, **characterised in that** said bush (4) furthermore provides means for the engagement with complementary engagement means provided on said fixed body.

3. Knob as in claim 2, **characterised in that** said engagement means comprises a threaded bush.

4. Knob as in claim 2, **characterised in that** said engagement means comprises a stud.

5. Knob as in any one of claims from 1 to 4, **characterised in that** said engagement teeth (5c) projecting below from said slider (5) comprises a base (5d) from which a half-cylinder (5e) of a smaller diameter projects, said half-cylinder (5e) having a planar vertical wall and a summit face (5f) inclined from the inside towards the outside for identifying a slide portion.

6. Knob as in any one of the preceding claims, **characterised in that** said outer glass-shaped casing (2) is provided with radial tabs (2a) on the summit thereof which engage with said gripping element (1).

7. Knob as in claim 6, **characterised in that** said outer glass-shaped casing (2) is provided with a series of shaped seats (2b) which house said engagement teeth (5c) of said slider (5) .

8. Knob as in any one of the preceding claims, **characterised in that** on said inner glass-shaped body (3) a radial scale (10) is furthermore provided which matches a series of inspection cut-outs on said spacer (7).

9. Knob as in any one of the preceding claims, **characterised in that** a summit cover (9) is furthermore provided for the engagement with said gripping element (1), said cover (9) being provided with a sealing toroidal thickening and lower tabs for the engagement with said spacer (7).

10. Knob according to any one of the preceding claims, **characterized in that** a sealing O-ring (8a) associated with a flat washer (8b) is arranged between the screw (8) head and the abutment surface of the spacer (7).

## Patentansprüche

1. Knauf zum Verbinden eines Objekts mit einem festen Körper, umfassend ein äußeres hohles Greifelement (1), das innere Eingriffsmittel mit dem Objekt und mit dem festen Körper aufnimmt, **dadurch gekennzeichnet, dass** die Eingriffsmittel ein äußeres glasförmiges Gehäuse (2) mit einem zentralen Loch umfassen, das mit einem festen inneren Körper kombiniert ist, umfassend
einen inneren glasförmigen Körper (3), der Drehmomenteinstellmittel aufnimmt, wobei die Drehmomenteinstellmittel umfassen:
- einen ringförmigen Schieber (5), von dem Zapfen (5b) an einem Seitenende vorstehen und Eingriffszähne (5c) auf einer gegenüberliegenden Seite vorstehen;
- einen Abstandshalter (7) mit einem zentralen Loch, der mit Eingriffselementen versehen ist;
- eine Buchse (4), die zusammen mit dem glasförmigen Körper (3) geformt ist, die eine Halteschraube (8) des Abstandshalters (7) aufnimmt, und
- Federn (6), die zwischen dem Abstandshalter (7) und dem Schieber (5) angeordnet sind und in einer stabilen Position innerhalb der oben genannten Zapfen (5b) des Schiebers (5) gehalten werden;
wobei der innere glasförmige Körper (3) mit einer Reihe von kreisförmigen Löchern an einer Basis davon versehen ist, in die die Eingriffszähne (5c) eingesetzt sind.

2. Knauf nach Anspruch 1, **dadurch gekennzeichnet, dass** die Buchse (4) ferner Mittel für den Eingriff mit komplementären Eingriffsmitteln bereitstellt, die an dem festen Körper bereitgestellt sind.

3. Knauf nach Anspruch 2, **dadurch gekennzeichnet, dass** die Eingriffsmittel eine Gewindebuchse umfassen.

4. Knauf nach Anspruch 2, **dadurch gekennzeichnet, dass** die Eingriffsmittel einen Bolzen umfassen.

5. Knauf nach einem der Ansprüche 1 bis 4, **dadurch gekennzeichnet, dass** die Eingriffszähne (5c), die von dem Schieber (5) nach unten vorstehen, eine Basis (5d) umfassen, von der ein Halbzylinder (5e) mit einem kleineren Durchmesser vorsteht, wobei der Halbzylinder (5e) eine ebene vertikale Wand und eine Scheitelfläche (5f) aufweist, die von innen nach außen geneigt ist, um einen Gleitabschnitt zu identifizieren.

6. Knauf nach einem der vorhergehenden Ansprüche, **dadurch gekennzeichnet, dass** das äußere glasförmige Gehäuse (2) mit radialen Laschen (2a) an seinem Scheitel versehen ist, die mit dem Greifelement (1) in Eingriff stehen.

7. Knauf nach Anspruch 6, **dadurch gekennzeichnet, dass** das äußere glasförmige Gehäuse (2) mit einer Reihe von geformten Sitzen (2b) versehen ist, die die Eingriffszähne (5c) des Schiebers (5) aufnehmen.

8. Knauf nach einem der vorhergehenden Ansprüche, **dadurch gekennzeichnet, dass** an dem inneren glasförmigen Körper (3) ferner eine radiale Skala (10) bereitgestellt ist, die zu einer Reihe von Inspektionsausschnitten an dem Abstandshalter (7) passt.

9. Knauf nach einem der vorhergehenden Ansprüche, **dadurch gekennzeichnet, dass** ferner eine Scheitelabdeckung (9) für den Eingriff mit dem Greifelement (1) bereitgestellt ist, wobei die Abdeckung (9) mit einer ringförmigen Dichtungsverdickung und unteren Laschen für den Eingriff mit dem Abstandshalter (7) versehen ist.

10. Knauf nach einem der vorhergehenden Ansprüche, **dadurch gekennzeichnet, dass** ein Dichtungs-O-Ring (8a), der einer flachen Unterlegscheibe (8b) zugeordnet ist, zwischen dem Kopf der Schraube (8) und der Anlagefläche des Abstandshalters (7) angeordnet ist.

## Revendications

1. Poignée pour relier un objet à un corps fixe, comprenant un élément de préhension creux externe (1) qui loge, à l'intérieur de celui-ci, des moyens d'engagement avec ledit objet et avec ledit corps fixe, **caractérisée en ce que** lesdits moyens d'engagement comprennent un boîtier formé en verre extérieur (2) avec un trou central combiné avec un corps interne fixe comprenant un corps formé en verre intérieur (3) qui loge des moyens d'ajustement de couple à l'intérieur de celui-ci, dans lequel lesdits moyens d'ajustement de couple comprennent :
- une glissière annulaire (5) de laquelle des chevilles (5b) font saillie à une extrémité d'un côté et des dents d'engagement (5c) font saillie d'un côté opposé ;
- une entretoise (7), avec un trou central, pourvue d'éléments d'engagement ;
- une douille (4), co-moulée avec ledit corps formé en verre (3), qui loge une vis de retenue (8) de ladite entretoise (7) et
- des ressorts (6) agencés entre ladite entretoise (7) et ladite glissière (5), maintenus dans une position stable à l'intérieur des chevilles (5b) précitées de ladite glissière (5) ;
ledit corps formé en verre interne (3) étant pourvu d'une série de trous circulaires, sur une base de celui-ci, dans lesquels lesdites dents d'engagement (5c) sont insérées.

2. Poignée selon la revendication 1, **caractérisée en ce que** ladite douille (4) prévoit en outre des moyens pour l'engagement avec des moyens d'engagement complémentaires prévus sur ledit corps fixe.

3. Poignée selon la revendication 2, **caractérisée en ce que** lesdits moyens d'engagement comprennent une douille filetée.

4. Poignée selon la revendication 2, **caractérisée en ce que** lesdits moyens d'engagement comprennent un goujon.

5. Poignée selon l'une des revendications 1 à 4, **caractérisée en ce que** lesdites dents d'engagement (5c) saillantes au-dessous de ladite glissière (5) comprennent une base (5d) de laquelle un demi-cylindre (5e) d'un diamètre inférieur fait saillie, ledit demi-cylindre (5e) présentant une paroi verticale plane et une face de sommet (5f) inclinée depuis l'intérieur vers l'extérieur pour identifier une partie de glissement.

6. Poignée selon l'une des revendications précédentes, **caractérisée en ce que** ledit boîtier formé en verre extérieur (2) est pourvu de pattes radiales (2a) sur le sommet de celui-ci qui s'engagent avec ledit élément de préhension (1).

7. Poignée selon la revendication 6, **caractérisée en ce que** ledit boîtier formé en verre extérieur (2) est pourvu d'une série de sièges façonnés (2b) qui logent lesdites dents d'engagement (5c) de ladite glissière (5).

8. Poignée selon l'une des revendications précédentes, **caractérisée en ce que**, sur ledit corps formé en verre intérieur (3), une échelle radiale (10) est en outre prévue, qui correspond à une série de découpes d'inspection sur ladite entretoise (7).

9. Poignée selon l'une des revendications précédentes, **caractérisée en ce qu'**un couvercle de sommet (9) est en outre prévu pour l'engagement avec ledit élément de préhension (1), ledit couvercle (9) étant pourvue d'un épaississement toroïdal de scellement et de pattes inférieures pour l'engagement avec ladite entretoise (7).

10. Poignée selon l'une des revendications précédentes, **caractérisée en ce qu'**un joint torique de scellement (8a) associé à une rondelle plate (8b) est agencé entre la tête de la vis (8) et la surface de butée de l'entretoise (7).
